# EUROPÄISCHE PATENTSCHRIFT

(11) **EP 1 442 510 B1**
(45) Veröffentlichungstag und Bekanntmachung des Hinweises auf die Patenterteilung: **05.03.2008**
(21) Anmeldenummer: 02754400.6
(22) Anmeldetag: 20.07.2002
(51) Int. Cl.: H02K 23/18, H01H 9/06

(54) **ELEKTROMASCHINE UND HANDWERKZEUGMASCHINE MIT DERGLEICHEN**
ELECTRIC MACHINE AND MANUAL MACHINE TOOL COMPRISING THE SAME
MACHINE ELECTRIQUE ET MACHINE PORTABLE EQUIPEE DE CELLE-CI

(30) Priorität: 26.10.2001 DE 10152963
(43) Veröffentlichungstag der Anmeldung: 04.08.2004
(73) Patentinhaber: ROBERT BOSCH GMBH, 70442 Stuttgart (DE)
(72) Erfinder: BUCK, Manfred, 72622 Nürtingen (DE); BAUMANN, Otto, 70771 Leinfelden-Echterdingen (DE); FEHRLE, Siegfried, 70771 Leinfelden-Echterdingen (DE); SAUR, Dietmar, 72810 Gomaringen (DE); ULLRICH, Andre, 70794 Filderstadt-Bernhausen (DE); WEISS, Michael, 70193 Stuttgart (DE)
(74) Vertreter: Daub, Thomas
(86) Internationale Anmeldenummer: PCT/DE2002/002680
(87) Internationale Veröffentlichungsnummer: WO 2003/038974

(56) Entgegenhaltungen:
- EP-A- 0 329 249
- EP-A- 0 924 842
- DE-A- 3 731 079
- US-A- 5 138 243

## Beschreibung

### Stand der Technik

Die Erfindung geht aus von einer Elektromaschine nach dem Oberbegriff des Anspruchs 1.

Es ist bekannt, bei Elektromaschinen mit einer auf einem Gehäuseboden eines Gehäuseteils drehbaren Bürstenplatte, diese über eine in Umfangsrichtung wirkende Halteeinheit in ihren Endstellungen zu halten. Die Halteeinheit besitzt an der Bürstenplatte angeformte, den Gehäuseboden hintergreifende Haken, die bei einer Drehbewegung der Bürstenplatte in Umfangsrichtung entlang einer radial nach außen weisenden Stirnseite des Gehäusebodens bewegt werden. Die Stirnseite weist radial nach außen weisende Erhebungen auf, die in Umfangsrichtung mit einem Abstand vor Endanschlägen an den Gehäuseboden angeformt sind. Die Abstände zwischen den Endanschlägen und den entsprechenden Erhebungen sind so gewählt, daß diese einer Hakenbreite entsprechen. Bei einem Drehen der Bürstenplatte bewegt sich der Haken über die in radialer Richtung weisende Erhebung und kommt in einer Endstellung zwischen dem entsprechenden Endanschlag und der jeweiligen Erhebung zum Liegen. Die Bürstenplatte ist in Umfangsrichtung durch den Endanschlag und die radiale Erhebung gesichert.

Aus der Druckschrift US 5,138,243 ist eine Elektromaschine mit einer drehbaren Bürstenplatte bekannt. Die Elektromaschine weist eine Einheit mit Rückstellfedern auf, die die Bürstenplatte in Umfangsrichtung belasten, wobei die Einheit und die Rückstellfedern dazu vorgesehen sind, eine automatische Rückstellung von einer Stellung in eine Endstellung zu bewirken. Zudem umfasst die Elektromaschine eine Stoppvorrichtung, um die Bürstenplatte in einer Stellung zu fixieren.

Ferner ist aus der Druckschrift DE 37 31 079 A1 eine Elektromaschine mit einem drehbaren Bürstenträger und mit einer Rastvorrichtung zur Arretierung des Bürstenträgers in seinen Endstellungen bekannt. Die Rastvorrichtung umfasst ein Sackloch, das achsparallel zum Bürstenträger verläuft und zu diesem hin offen ausgebildet ist. Im Sackloch ist eine Druckfeder angeordnet, die eine Kugel in axialer Richtung beaufschlagt, so dass die Kugel in zwei kalottenartige, mit einer Verschieberichtung der Kugel fluchtende Ausnehmungen am Bürstenträger, angetrieben durch die Druckfeder, einrasten kann.

Die Druckfeder dient zur Erzeugung eines Rastwiderstands, der überwunden werden muss, um den Bürstenträger aus seinen beiden Endstellungen heraus zu verdrehen.

### Vorteile der Erfindung

Die Erfindung geht aus von einer Elektromaschine mit einer drehbaren Bürstenplatte, die über zumindest eine in Umfangsrichtung wirkende Halteeinheit in ihren Endstellungen gehalten ist.

Es wird vorgeschlagen, daß die Halteeinheit zumindest ein Mittel aufweist, das die Bürstenplatte in Umfangsrichtung belastet und die anderen Merkmale des Anspruchs 1 aufweist. Die Bürstenplatte kann vorteilhaft entgegen einer Drehrichtung einer Ankerwelle stets spielfrei in ihrer jeweiligen Endstellung gehalten werden, und ein Abnutzen der Halteeinheit, insbesondere von radial nach außen weisenden Erhebungen, kann vorteilhaft vermieden werden. Ein Kontakt zwischen einer gehäusefesten Leiterbahn und eines an der Bürstenplatte montierten Kohleköchers kann in den Endstellungen stets gewährleistet werden, wodurch ein Abbrennen von Kontakten und ein durch das Abbrennen bedingter Ausfall der Elektromaschine vermeidbar ist.

Das Mittel weist zumindest im montierten Zustand eine bistabile Lage auf. Es können mit einem Mittel bzw. mit wenigen Bauteilen konstruktiv einfach zwei Kräfte in entgegengesetzter Richtung erzeugt werden. Ferner kann erreicht werden, daß die Bürstenplatte durch das Mittel stets aus einem Zwischenbereich in eine ihrer Endstellungen bewegt wird.

Das Mittel kann von verschiedenen, dem Fachmann als sinnvoll erscheinenden Bauteilen gebildet sein, die von sich aus oder durch die Montage eine bistabile Lage aufweisen, wie z.B. von einem Relais, einem Federelement usw. Ist das Mittel von einem Federelement gebildet, kann eine konstruktiv einfache, robuste, kostengünstige und platzsparende Vorrichtung erreicht werden.

Das Federelement kann von verschiedenen Federelementen gebildet sein, die der Fachmann als sinnvoll erachtet, wie z.B. einer Tellerfeder, einer Schenkelfeder usw. Ist das Federelement von einer Schenkelfeder gebildet, ist eine kostengünstige und platzsparende Feder verwendbar, die vorteilhaft mit ihren Schenkeln in korrespondierende Ausnehmungen, die sich in der Bürstenplatte und in einem Gehäuseteil befinden, eingeführt werden kann. Die Schenkelfeder kann sich über den ersten Schenkel am Gehäuseteil abstützen und kann über den zweiten Schenkel mit einer Federkraft auf die Bürstenplatte in Richtung deren Endstellungen wirken.

In einer weiteren Ausgestaltung der Erfindung wird vorgeschlagen, daß die Schenkelfeder um den ersten Schenkel schwenkbar gelagert ist. Es kann konstruktiv einfach eine bistabile Lage der Schenkelfeder und eine einfache und schnell montierbare Halteeinheit erreicht werden.

Ferner wird vorgeschlagen, daß die Schenkelfeder über zumindest ein Rastelement an der Bürstenplatte einrastbar ist. Die Schenkelfeder kann vorteilhaft an der Bürstenplatte vormontiert und an dieser verliersicher gehalten werden. Die Bürstenplatte und die Schenkelfeder können als Einheit einfach montiert und demontiert werden.

Ist das Rastelement einstückig mit der Schenkelfeder ausgeführt, können zusätzliche Bauteile, Bauraum und Kosten eingespart werden.

Vorteilhaft weist zumindest ein Schenkel der Schenkelfeder ein Teil zur Vermeidung einer Fehlmontage auf. Das Teil kann von einem separaten Bauteil gebildet oder an einem Ende des Schenkels einstückig angeformt sein. Ist das Teil durch einen Biegevorgang an das Ende des Schenkels der Schenkelfeder angeformt, kann ein konstruktiv einfacher und kostengünstiger Schutz gegen die Fehlmontage erreicht werden.

In einer weiteren Ausgestaltung der Erfindung wird vorgeschlagen, daß eine Betätigungstaste einstückig mit der Bürstenplatte ausgeführt ist. Zusätzliche Bauteile, Bauraum, Gewicht und Montageaufwand können eingespart werden. Ferner kann, insbesondere im Bereich der Betätigungstaste, ein vorteilhafter Bauraum für das Mittel erreicht werden.

Ferner wird vorgeschlagen, daß die Bürstenplatte über zumindest eine Rasteinheit in ihren Endstellungen gehalten ist. Das Mittel kann in seiner Wirkung unterstützt und einem Bediener kann das Erreichen der jeweiligen Endstellung durch ein Einrasten spürbar übermittelt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisch dargestellte Bohrmaschine in einer Seitenansicht,
- Fig. 2: einen Längsschnitt durch einen Ausschnitt II in Fig. 1,
- Fig. 3: einen Schnitt entlang der Linie III-III in Fig. 2,
- Fig. 4: einen Schnitt entlang der Linie IV-IV in Fig. 2 in einer ersten Endstellung,
- Fig. 5: einen Schnitt entlang der Linie IV-IV in Fig. 2 in einer zweiten Endstellung und
- Fig. 6: einen Ausschnitt eines weiteren Ausführungsbeispiels mit einer alternativen Halteeinheit.

### Beschreibung der Ausführungsbeispiele

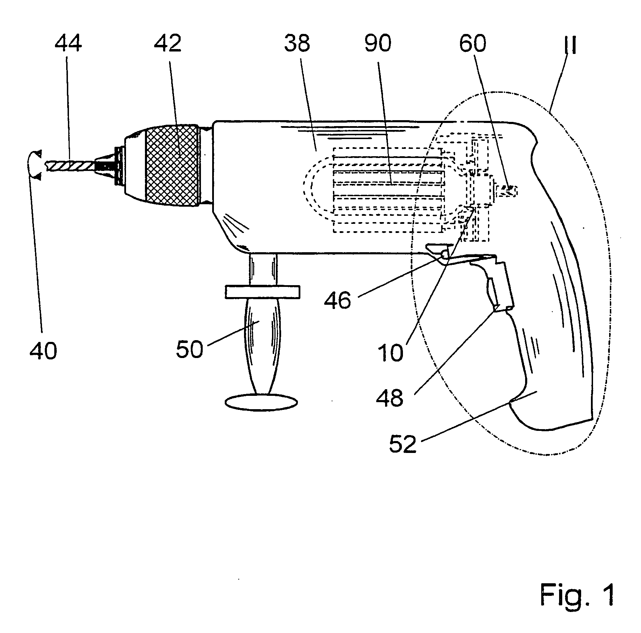

Fig. 1 zeigt eine Bohrmaschine mit einem in einem Gehäuse 38 montierten Elektromotor, dessen Drehrichtung 40 bzw. die Drehrichtung 40 eines in einer Werkzeughalterung 42 eingespannten Bohrers 44 über einen Umschalthebel 46 wählbar ist. Der Umschalthebel 46 ist oberhalb eines Betätigungsschalters 48 der Bohrmaschine angeordnet, so daß ein Bediener mit einer Hand den Betätigungsschalter 48 bedienen, die Bohrmaschine ein- oder ausschalten und die gewünschte Drehrichtung 40 des Bohrers 44 mit dem Umschalthebel 46 wählen kann. Auf einer der Werkzeughalterung 42 zugewandten Seite der Bohrmaschine ist ein erster, sich senkrecht zur Betätigungsrichtung erstreckender Handgriff 50 am Gehäuse 38 befestigt. Auf einer der Werkzeughalterung 42 abgewandten Seite des Gehäuses 38 ist ein zweiter sich senkrecht zur Betätigungsrichtung erstreckender Handgriff 52 angeordnet, der einen Teil des Gehäuses 38 bildet.

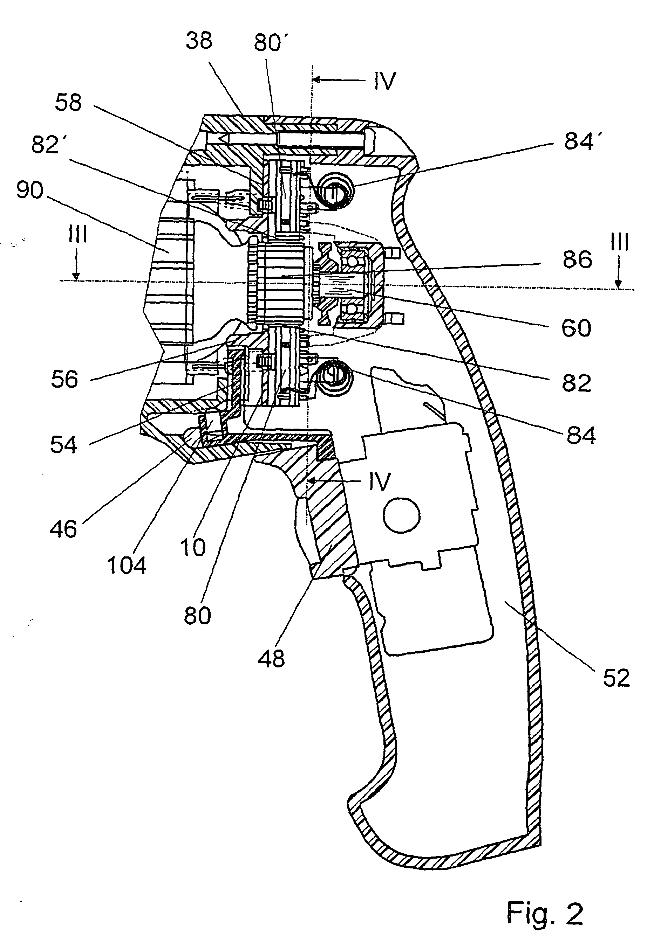

Der Umschalthebel 46 weist eine Schaltgabel 54 auf, die mit ihrem freien Ende formschlüssig einen Anlenkzapfen 56 umgreift (Fig. 2, 3, 4 und 5). Der Anlenkzapfen 56 ist in einem zum Umschalthebel 46 nahen, unteren Bereich an eine Bürstenplatte 10 angeformt. Die Bürstenplatte 10, die drehbar auf einem Gehäuseboden 58 gelagert ist, umschließt radial eine Ankerwelle 60. Die Bürstenplatte 10 wird in axialer Richtung über Stege 88 gesichert, die sich auf einer einer Ankerwicklung 90 abgewandten Seite der Bürstenplatte 10 in axialer Richtung zur Werkzeughalterung 42 erstrecken und an einer Innenseite des Handgriffs 52 angeformt sind.

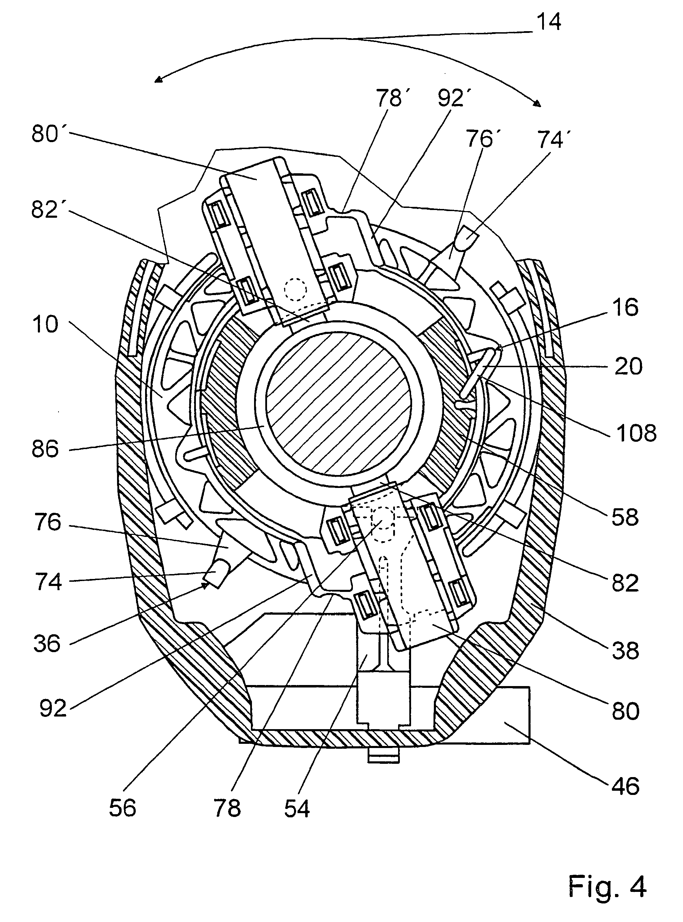

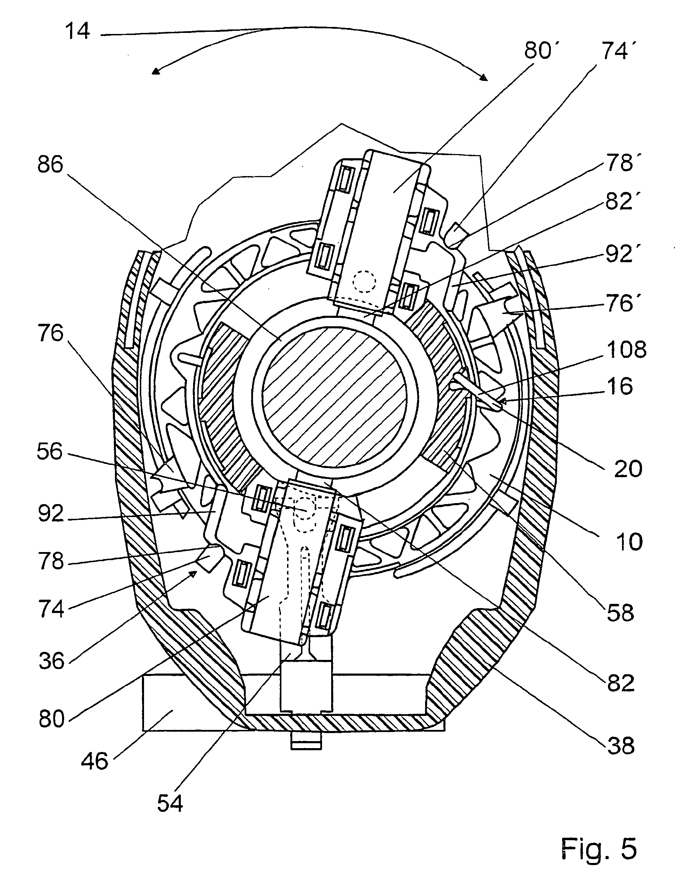

Auf der Bürstenplatte 10 sind Kohleköcher 80, 80' angeordnet, die einander diagonal gegenüberliegen (Fig. 4 und 5). Die Kohleköcher 80, 80' weisen nicht näher dargestellte Ausnehmungen zur Aufnahme von Kohlebürsten 82, 82' auf. Die Kohlebürsten 82, 82' werden von Federelementen 84, 84' radial nach innen auf einen Kommutator 86 gedrückt (Fig. 2).

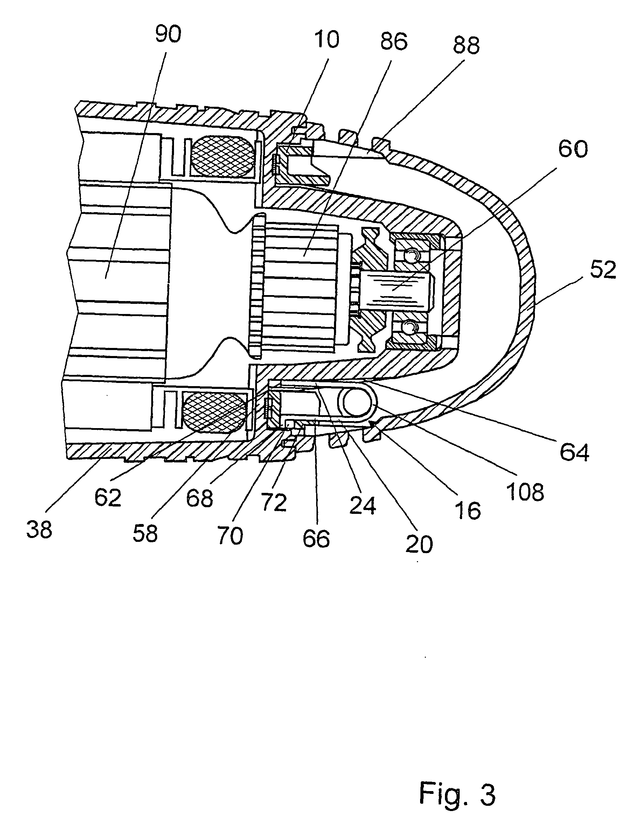

Die Bürstenplatte 10 wird über eine in Umfangsrichtung 14 wirkende Halteeinheit 16 in ihren Endstellungen gehalten (Fig. 3, 4 und 5). Die Halteeinheit 16 besitzt ein von einer Schenkelfeder gebildetes Mittel 20, das eine bistabile Lage aufweist und die Bürstenplatte 10 ab einer neutralen, instabilen, mittleren Stellung in Umfangsrichtung 14 jeweils in Richtung ihren Endstellungen belastet. Die Schenkelfeder 20 besitzt einen ersten und einen zweiten Schenkel 24, 66, die über eine Windung 108 der Schenkelfeder 20 miteinander verbunden sind.

Die Schenkelfeder 20 ist um den ersten Schenkel 24 schwenkbar um dessen Längsachse gelagert (Fig. 3). Der erste Schenkel 24, dessen Ende 62 zur Werkzeughalterung 42 weist, greift in einen Längskanal 64 ein, der an einem Außenumfang eines topfförmigen inneren, vom Handgriff 52 umschlossenen Bereichs des Gehäuses 38 angeformt ist. Im topfförmigen Bereich des Gehäuses 38 ist die Ankerwelle 60 des Elektromotors gelagert.

Der zweite Schenkel 66 der Schenkelfeder 20, der ebenfalls zur Werkzeughalterung 42 weist, besitzt an seinem Ende 68 einen radial nach außen abgewinkelten Bereich. Der zweite Schenkel 66 greift mit dem abgewinkelten Bereich in einen Querkanal 70 formschlüssig ein, der an einem radial äußeren Bund 72 der Bürstenplatte 10 angeformt ist.

Die Schenkelfeder 20 stützt sich mit ihrem ersten Schenkel 24 im Längskanal 64 am Gehäuse 38 ab und drückt mit ihrem zweiten Schenkel 66 über den Querkanal 70 die Bürstenplatte 10 in Umfangsrichtung 14 in ihre erste Endstellung (Fig. 4). In der ersten Endstellung wird die Bürstenplatte 10 zusätzlich über eine Rasteinheit 36 in Umfangsrichtung gesichert.

Die Rasteinheit 36 besitzt zwei an das Gehäuse 38 angeformte, diagonal gegenüberliegende Rastbolzen 74, 74' (Fig. 4). Die Rastbolzen 74, 74' greifen in der ersten Endstellung der Bürstenplatte 10 in Rastausnehmungen 76, 76' formschlüssig ein, die in radial nach außen weisenden, an die Bürstenplatte 10 angeformte Erhebungen eingebracht sind.

Betätigt ein Bediener den Umschalthebel 46, wird die Bürstenplatte 10 über die Schaltgabel 54 und den Anlenkzapfen 56 in Umfangsrichtung 14 gedreht und die Rastbolzen 74, 74' und die Rastausnehmungen 76, 76' der Rasteinheit 36 kommen außer Eingriff. Die Schenkelfeder 20 wird über ihre Schenkel 24, 66 bis zum Erreichen der neutralen Stellung zusammengedrückt. Nach dem Überschreiten der neutralen Stellung entspannt sich die Schenkelfeder 20 und drückt die Bürstenplatte 10 über ihren zweiten Schenkel 66 in Umfangsrichtung 14 in ihre zweite Endstellung und stützt sich dabei mit ihrem ersten Schenkel 24 im Längskanal 64 des Gehäuses 38 ab. Beim Erreichen der zweiten Endstellung kommen die Rastbolzen 74, 74' mit zwei weiteren, an Bügel 92, 92' der Kohleköcher 80, 80' angeformte Rastausnehmungen 78, 78' in Eingriff. Die Bürstenplatte 10 wird neben der Schenkelfeder 20 über die Rastbolzen 74, 74' und die Rastausnehmungen 78, 78' in Umfangsrichtung in ihrer zweiten Endstellung gesichert. Über einen in einer Ausnehmung der Schaltgabel 54 federbelasteten Rastbolzen 104 wird der Umschalthebel 46 bzw. die Schaltgabel 54 in der jeweiligen Endstellung der Bürstenplatte 10 zusätzlich am Gehäuse 38 fixiert, und zwar indem dieser in den Endstellungen in Ausnehmungen des Gehäuses 38 einrastet (Fig. 2).

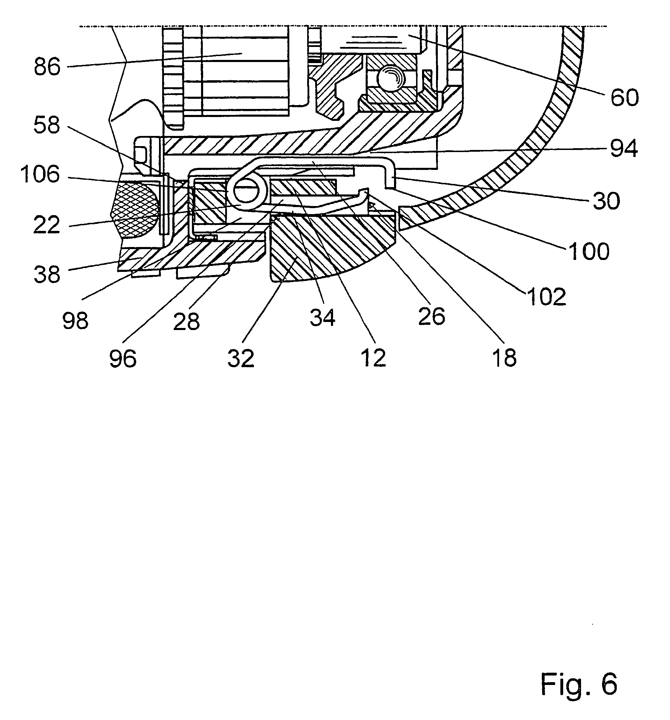

In Fig. 6 ist ein Ausschnitt eines Ausführungsbeispiels mit einer alternativen Halteeinheit 18 dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in den Fig. 1 bis 5 verwiesen werden. Die nachfolgende Beschreibung beschränkt sich im wesentlichen auf die Unterschiede zum Ausführungsbeispiel in den Fig. 1 bis 5.

Die Halteeinheit 18 besitzt ein von einer Schenkelfeder gebildetes Mittel 22, das eine bistabile Lage aufweist und die Bürstenplatte 12 jeweils ab einer neutralen, instabilen Stellung in Umfangsrichtung 14 jeweils in Richtung ihren Endstellungen belastet. Die Schenkelfeder 22 besitzt einen ersten und einen zweiten Schenkel 26, 34, die über eine Windung 106 der Schenkelfeder 22 miteinander verbunden sind.

Die Schenkelfeder 22 ist um den ersten Schenkel 26 schwenkbar um dessen Längsachse gelagert. Der erste Schenkel 26 weist in die von einer Werkzeughalterung 42 abgewandte Richtung und greift in einen Längskanal 94 ein, der an einem Außenumfang eines topfförmigen inneren, vom Handgriff 52 umschlossenen Bereichs eines Gehäuses 38 angeformt ist. An seinem Ende 100 besitzt der erste Schenkel 26 einen radial nach außen abgewinkelten Bereich, der ein Teil 30 zur Vermeidung einer Fehlmontage bildet.

Der zweite Schenkel 34 der Schenkelfeder 22, der ebenfalls in die von der Werkzeughalterung 42 abgewandte Richtung weist, besitzt an seinem Ende 102 einen radial nach innen abgewinkelten Bereich, ist als Rastelement 28 ausgebildet und besitzt eine abgewinkelte Längsachse. An einen radial äußeren Bereich der Bürstenplatte 12 ist eine Betätigungstaste 32 angeformt, die nach außen aus dem Gehäuse 38 ragt. Der zweite Schenkel 34 greift in einen Längskanal 96, der in dem radial äußeren Bereich der Bürstenplatte 12 an dieselbe angeformt ist.

Bei der Montage wird der zweite Schenkel 34 der Schenkelfeder 22 über eine Tasche 98 in der Bürstenplatte 12 in den Längskanal 96 eingeführt und dabei elastisch verformt. Nachdem der zweite Schenkel 34 mit seinem Ende 102 den Längskanal 96 durchquert hat, und beim Einrasten der Schenkelfeder 22 mit ihrer Windung 106 in der Tasche 98, entspannt sich der zweite Schenkel 34 und die Schenkelfeder 22 ist verliersicher an der Bürstenplatte 12 befestigt. Die Bürstenplatte 12 kann gemeinsam mit der vormontierten Schenkelfeder 22 im Gehäuse 38 montiert werden. Dabei wird der erste Schenkel 26 der Schenkelfeder 22 in den offenen Längskanal 94 eingeführt.

Die Schenkelfeder 22 stützt sich im montierten Zustand mit ihrem ersten Schenkel 26 im Längskanal 94 am Gehäuse 38 ab und drückt mit ihrem zweiten Schenkel 34 über den Längskanal 96 die Bürstenplatte 12 in Umfangsrichtung 14 in ihre erste Endstellung.

Über die seitlich aus dem Gehäuse 38 ragende Betätigungstaste 32 kann ein Bediener die Bürstenplatte 12 auf einem Gehäuseboden 58 in Umfangsrichtung 14 verdrehen. Die Schenkelfeder 22 wird über ihre Schenkel 26, 34 bis zum Erreichen der neutralen Stellung zusammengedrückt. Nach dem Überschreiten der neutralen Stellung entspannt sich die Schenkelfeder 22 und drückt die Bürstenplatte 12 und die Betätigungstaste 32 über ihren zweiten Schenkel 34 in Umfangsrichtung 14 in ihre zweite Endstellung und stützt sich dabei mit ihrem ersten Schenkel 26 im Längskanal 94 des Gehäuses 38 ab.

### Bezugszeichen

- 10: Bürstenplatte
- 12: Bürstenplatte
- 14: Umfangsrichtung
- 16: Halteeinheit
- 18: Halteeinheit
- 20: Mittel
- 22: Mittel
- 24: Schenkel
- 26: Schenkel
- 28: Rastelement
- 30: Teil
- 32: Betätigungstaste
- 34: Schenkel
- 36: Rasteinheit
- 38: Gehäuse
- 40: Drehrichtung
- 42: Werkzeughalterung
- 44: Bohrer
- 46: Umschalthebel
- 48: Betätigungsschalter
- 50: Handgriff
- 52: Handgriff
- 54: Schaltgabel
- 56: Anlenkzapfen
- 58: Gehäuseboden
- 60: Ankerwelle
- 62: Ende
- 64: Längskanal
- 66: Schenkel
- 68: Ende
- 70: Querkanal
- 72: Bund
- 74: Rastbolzen
- 76: Rastausnehmung
- 78: Rastausnehmung
- 80: Kohleköcher
- 82: Kohlebürste
- 84: Federelement
- 86: Kommutator
- 88: Steg
- 90: Ankerwicklung
- 92: Bügel
- 94: Längskanal
- 96: Längskanal
- 98: Tasche
- 100: Ende
- 102: Ende
- 104: Rastbolzen
- 106: Windung
- 108: Windung

## Patentansprüche

1. Elektromaschine mit einer drehbaren Bürstenplatte (10, 12), die über zumindest eine in Umfangsrichtung (14) wirkende Halteeinheit (16, 18) in ihren Endstellungen gehalten ist, wobei die Halteeinheit (16, 18) zumindest ein Mittel (20, 22) aufweist, das die Bürstenplatte (10, 12) in Umfangsrichtung (14) belastet, **dadurch gekennzeichnet, daß** das Mittel (20, 22), zur Erzeugung zweier in entgegensetzte Richtungen wirkender Kräfte zur Belastung der Bürstenplatte (10, 12) jeweils in Richtung ihrer Endstellungen, zumindest im montierten Zustand eine bistabile Lage aufweist.

2. Elektromaschine nach Anspruch 1, **dadurch gekennzeichnet, daß** das Mittel (20, 22) von einem Federelement gebildet ist.

3. Elektromaschine nach Anspruch 2, **dadurch gekennzeichnet, daß** das Mittel (20, 22) von einer Schenkelfeder gebildet ist.

4. Elektromaschine nach Anspruch 3, **dadurch gekennzeichnet, daß** die Schenkelfeder (20, 22) um einen ersten Schenkel (24, 26) schwenkbar gelagert ist.

5. Elektromaschine nach Anspruch 3 oder 4, **dadurch gekennzeichnet, daß** die Schenkelfeder (22) über zumindest ein Rastelement (28) an der Bürstenplatte (12) einrastbar ist.

6. Elektromaschine nach Anspruch 5, **dadurch gekennzeichnet, daß** das Rastelement (28) einstückig mit der Schenkelfeder (22) ausgeführt ist.

7. Elektromaschine nach einem der Ansprüche 3 bis 6, **dadurch gekennzeichnet, daß** zumindest ein Schenkel (26) der Schenkelfeder (22) ein Teil (30) zur Vermeidung einer Fehlmontage aufweist.

8. Elektromaschine nach einem der vorhergehenden Ansprüche, **dadurch gekennzeichnet, daß** eine Betätigungstaste (32) einstückig mit der Bürstenplatte (12) ausgeführt ist.

9. Elektromaschine nach einem der vorhergehenden Ansprüche, **dadurch gekennzeichnet, daß** die Bürstenplatte (10, 12) über zumindest eine Rasteinheit (36) in ihren Endstellungen gehalten ist.

10. Handwerkzeugmaschine mit einer Elektromaschine nach einem der vorhergehenden Ansprüche.

## Claims

1. Electrical machine comprising a rotatable brush plate (10, 12) which is held in its end positions by means of at least one holding unit (16, 18) which acts in the circumferential direction (14), with the holding unit (16, 18) having at least one means (20, 22) which loads the brush plate (10, 12) in the circumferential direction (14), **characterized in that** the means (20, 22) has a bistable position at least in the installed state in order to generate two forces, which act in opposite directions, for loading the brush plate (10, 12) in each case in the direction of its end positions.

2. Electrical machine according to Claim 1, **characterized in that** the means (20, 22) is formed by a spring element.

3. Electrical machine according to Claim 2, **characterized in that** the means (20, 22) is formed by a leg spring.

4. Electrical machine according to Claim 3, **characterized in that** the leg spring (20, 22) is mounted such that it can be pivoted about a first leg (24, 26).

5. Electrical machine according to Claim 3 or 4, **characterized in that** the leg spring (22) can be latched to the brush plate (12) by means of at least one latching element (28).

6. Electrical machine according to Claim 5, **characterized in that** the latching element (28) is integrally formed with the leg spring (22).

7. Electrical machine according to one of Claims 3 to 6, **characterized in that** at least one leg (26) of the leg spring (22) has a part (30) for preventing incorrect installation.

8. Electrical machine according to one of the preceding claims, **characterized in that** an operating button (32) is integrally formed with the brush plate (12).

9. Electrical machine according to one of the preceding claims, **characterized in that** the brush plate (10, 12) is held in its end positions by means of at least one latching unit (36).

10. Hand-held machine tool comprising an electrical machine according to one of the preceding claims.

## Revendications

1. Moteur électrique comportant une plaque porte-balai (10, 12), pivotante, tenue dans ses positions de fin de course par au moins une unité de fixation (16, 18) agissant dans la direction périphérique (14),
l'unité de fixation (16, 18) comportant au moins un moyen (20, 22) qui sollicite la plaque porte-balai (10, 12) dans la direction périphérique (14),
**caractérisé en ce que**
le moyen (20, 22) pour générer deux forces agissant dans des directions opposées pour solliciter la plaque porte-balai (10, 12) chaque fois en direction de ses positions de fin de course, présente une position bistable au moins à l'état monté.

2. Moteur électrique selon la revendication 1,
**caractérisé en ce que**
le moyen (20, 22) est constitué par un élément de ressort.

3. Moteur électrique selon la revendication 2,
**caractérisé en ce que**
le moyen (20, 22) est constitué par un ressort à branches.

4. Moteur électrique selon la revendication 3,
**caractérisé en ce que**
le ressort à branches (20, 22) est monté pivotant autour d'une première branche (24, 26).

5. Moteur électrique selon la revendication 3 ou 4,
**caractérisé en ce que**
le ressort à branches (22) est enclipsé par au moins un élément d'enclipsage (28) dans la plaque porte-balai (12).

6. Moteur électrique selon la revendication 5,
**caractérisé en ce que**
l'élément d'enclipsage (28) fait corps avec le levier à branches (22).

7. Moteur électrique selon l'une des revendications 3 à 6,
**caractérisé en ce qu'**
au moins une branche (26) du ressort à banches (22) comporte une partie (30) de détrompage (30) pour éviter une erreur de montage.

8. Moteur électrique selon l'une des revendications précédentes,
**caractérisé en ce qu'**
une touche d'actionnement (32) fait corps avec la plaque porte-balai (12).

9. Moteur électrique selon l'une des revendications précédentes,
**caractérisé en ce que**
la plaque porte-balai (10, 12) est tenue dans ses positions de fin de course par au moins une unité d'enclipsage (36).

10. Machine-outil portative équipée d'un moteur électrique selon l'une des revendications précédentes.
